# EUROPÄISCHE PATENTSCHRIFT

(11) **EP 2 383 459 B1**
(45) Veröffentlichungstag und Bekanntmachung des Hinweises auf die Patenterteilung: **19.06.2013**
(21) Anmeldenummer: 11161800.5
(22) Anmeldetag: 11.04.2011
(51) Int. Cl.: F02M 47/02, F02M 55/00, F16L 37/14, F02M 61/16

(54) **Steckerfixierung**
Fixing device for connector
Dispositif de fixation d'un connecteur

(30) Priorität: 29.04.2010 DE 102010028379
(43) Veröffentlichungstag der Anmeldung: 02.11.2011
(73) Patentinhaber: Robert Bosch GmbH, 70442 Stuttgart (DE)
(72) Erfinder: Maier, Ralf, 71732, Tamm (DE); Hauk, Ernst, 71679, Asperg (DE); Roehr, Dieter, 96132, Schluesselfeld (DE); Howey, Friedrich, 71254, Ditzingen (DE); Gaudl, Andreas, 73630, Remshalden (DE); Klauk, Dietrich, 70469, Stuttgart (DE)

(56) Entgegenhaltungen:
- EP-A1- 0 886 065
- DE-A1- 19 650 865
- DE-A1-102007 026 488

## Beschreibung

Aus DE 196 50 865 A1 ist ein an einem Kraftfahrzeug-Einspritzventil eingesetztes Magnetventil bekannt. Der Magnetanker des Magnetventils ist mehrteilig ausgebildet und weist eine Ankerscheibe sowie einen Ankerbolzen auf, der in einem Gleitstück geführt ist. Um ein Nachschwingen der Ankerscheibe nach einem Schließen des Magnetventiles zu vermeiden, ist am Magnetanker eine Dämpfungseinrichtung vorgesehen. Mit einer derartigen Dämpfungseinrichtung sind exakt die erforderlichen kurzen Schaltzeiten des Magnetventils einhaltbar. Das Magnetventil gemäß DE 196 50 865 A1 wird insbesondere zur Anwendung bei Einspritzanlagen mit Hochdrucksammelraum (Common-Rail) eingesetzt. Gemäß dieser Lösung wird die Magnethülse, die den Elektromagneten des Magnetventils umgibt, mit einer Magnetspannmutter am Injektorkörper des Kraftstoffinjektors befestigt.

Aus DE 10 2007 026 488 A1 ist eine Magnetbaugrupe mit Bajonettverschluss bekannt. Bei dieser Lösung erfolgt die Montage des Magnetkerns von unten durch eine unterbrochene Schulter im Magnethalter gegen die Wirkung einer Tellerfeder. Sobald der Magnetkern mit seiner Unterseite hinter der Schulter liegt, wird dieser verdreht und unter die vorstehenden Segmente positioniert. Die Magnetspule wird anschließend eingeschoben, so dass die Spulenpins, die für die elektrische Kontaktierung der Magnetspule erforderlich sind, durch zwei Öffnungen des Magnetteiles geführt sind. Diese Durchführung wird gemäß der Lösung aus DE 10 2007 026 488 A1 durch Klebstoff gegen Austritt von Kraftstoff abgedichtet. Die Klebstoffdichtung ist beschränkt haltbar bei hohen Drücken im Niederdruckbereich und eignet sich nicht für Anwendungen in hohen Temperaturbereichen, da sich dort die Viskosität des eingesetzten Klebstoffes und dessen Abdichtwirkung verschlechtern und ebenfalls nicht für Systeme, die mit sehr hohen Systemdrücken arbeiten. Die oben stehend beschriebene Lösung weist den Nachteil auf, dass die Abdichtung durch Klebstoff eine Beschränkung hinsichtlich der Belastbarkeit darstellt.

Aus der EP 0886 065 A1 ist ein Kraftstoffinjektor mit einer Magnetbaugruppe bekannt, wobei der Krafstoffinjektor einen Rücklaufanschluss aufweist, und wobei eine Rücklaufleitung über einen Schnellverschluss an dem Rücklaufanschluss fixiert werden kann.

Kraftstoffinjektoren, die bei Speichereinspritzsystemen, wie dem Common-Rail-System eingesetzt werden und einen Kraftstoffrücklauf, eine Steuermenge und eine Leckagemenge aufweisen, benötigen einerseits einen hydraulischen Anschluss für den Kraftstoffrücklauf der derzeit als metallischer Ablaufstutzen realisiert wird und andererseits einen elektrischen Anschluss zur Bestromung der Magnetgruppe zur Betätigung des Kraftstoffinjektors. Zur Realisierung des elektrischen Anschlusses können Magnetgruppen mit einer Umspritzung versehen werden, welche die elektrische Schnittstelle zum Kraftstoffsystem darstellt. In diese Umspritzung sind elektrische Kontaktfahnen und der Ablaufstutzen eingebettet. Derzeit gibt es Umspritzungswerkzeuge für die verschiedenen auftretenden Winkel hinsichtlich der Steckerabgänge sowie zwei parallel existierende, festgelegte Steckerschnittstellen, die in voneinander abweichender Geometrie ausgebildet sind.

Zusätzlich enthält der Ablaufstutzen eine Schnittstelle für einen hydraulischen Rücklauf. Beide Anschlüsse, d.h. sowohl der hydraulische als auch der elektrische Anschluss werden vom Kunden während der Montage der Verbrennungskraftmaschine mit einem eigenen Stecker kontaktiert, welcher ein Verriegelungselement benötigt.

Eine Lösung umfasst ein Gehäuse mit einer Magnethülse, die den Magnetkern aufnimmt, eine Halteplatte und einen Ablaufstutzen. In diesen wird der Rücklaufstecker des Einspritzsystemes eingesteckt und dort verriegelt. Die Magnethülse, die Halteplatte und der Ablaufstutzen sind jeweils per Laserschweißen miteinander verbunden. Die Magnetgruppe ist mit einer Finalumspritzung umspritzt, die die Schnittstellung für die elektrische Kontaktierung bildet. Die Verriegelung des Rücklaufsteckers geschieht in einer Innennut innerhalb des Ablaufstutzens in Kombination mit einem Schnapphaken im Rücklaufstecker, die nach dem Einschieben gegen Zurückfedern blockiert wird. Im Ablaufstutzen kann auch beidseitig im oberen Bereich eine Nut eingebracht sein, in der eine federnde Halteklammer montiert ist. Der Rücklaufstecker seinerseits beinhaltet eine Nut, in die die Halteklammer nach der Aufbiegung einschnappt.

Bei einer Rücklaufsteckerverriegelung an einem Kraftstoffinjektor umfasst eine im metallischen Ablaufstutzen beidseitig im oberen Bereich eingebrachte Nut einen federnd ausgebildeten Klemmbügel. Der Rücklaufstecker seinerseits beinhaltet eine Nut, in die der Klemmbügel nach der Aufbiegung einschnappt. Die Beschriftung des Kraftstoffinjektors befindet sich auf einer Oberseite der Finalumspritzung der Magnetgruppe und wird teilweise durch den Klemmbügel verdeckt. Dies kann zur Beeinträchtigung der zur Beschriftung mittels Tintenstrahldrucker oder Laserdrucker oder dergleichen zur Verfügung stehenden Fläche führen bzw. deren Kameralesbarkeit beeinträchtigen. Ist beispielsweise ein Datamatrix-Code innerhalb der Beschriftung, kann dieser in der Serienfertigung nur an einer Position zwischen den offenen Enden des Klemmbügels positioniert werden. Aufgrund der großen Positionstoleranz des Klemmbügels am Ablaufstutzen, kann der Datamatrix-Code teilweise verdeckt werden, bzw. ist in seiner Größe beschränkt.

### Darstellung der Erfindung

Der erfindungsgemäß vorgeschlagenen Lösung folgend ist ein exzentrischer Rücklaufanschluss an der Magnetgruppe realisiert, bei dem eine Dichtfläche eines kundenseitig zu montierenden Rücklaufsteckers direkt in eine deckelförmige Halteplatte der Magnetgruppe integriert ist. Somit vermag die Halteplatte in ihrem Zentrum den Ankerbolzen eines druckausgeglichenen Ventiles abzustützen, während der Rücklauf durch eine axial verlaufende Bohrung realisiert werden kann, die insbesondere sehr leicht fertigungstechnisch darstellbar ist. Des Weiteren erlaubt die erfindungsgemäß vorgeschlagene Lösung die Verlegung der Rücklaufsteckerverriegelung in die Finalumspritzung, in welcher dazu entsprechende, kanalförmig ausgebildete Ausnehmungen integriert sind, die die Schenkel eines Klemmbügels aufnehmen, der an einer Geometrie des kundenseitigen Anschlusses verrastbar ist, so dass ein formschlüssiger Sitz des Klemmbügels in einer Nut am Stutzen des Rücklaufsteckers entsteht.

Die erfindungsgemäß vorgeschlagene Lösung bietet eine Reihe von Vorteilen. So ist die Aufnahme des Klemmbügels in zwei seitlich eingebrachten Taschen bezüglich des Stutzens des Rücklaufsteckers in der Finalumspritzung mit dem Vorteil verbunden, dass der Klemmbügel nur noch sehr wenig, nämlich nur mit dem zur Bedienung unbedingt notwendigen hinteren Teil aus der Finalumspritzung der Magnetgruppe heraussteht. Dadurch entsteht auf der Oberseite der Halteplatte bzw. der Finalumspritzung eine durchgängig ebene Fläche, die keinerlei Steuergeometrien mehr enthält, so dass diese beispielsweise durch Laserstrahl, Tintenstrahl oder mittels Aufkleber beschriftbar ist und mit dem bereits erwähnten Datamatrix-Code versehen werden kann. Da die Planseite störungsgeometriefrei ist, ist der Datamatrix-Code in einem größeren Freiheitsgrad applizierbar und kann aufgrund des Platzangebotes in einer größeren Anzahl von Geometrien ausgebildet werden, was wiederum Vorteile hinsichtlich der erforderlichen Lesegeräte bzw. dessen Auflösungsvermögen bietet. Ein weiterer Vorteil der erfindungsgemäß vorgeschlagenen Lösung ist der Umstand, dass die zusätzliche obere durchgehend ausgebildete Geometrie der Finalumspritzung, insbesondere durch deren durchgängig plan ausgebildeten Halteplatte, die Steifigkeit der Finalumspritzung verbessert wird. Damit liegen die Eigenfrequenzen der Umspritzung mit dem montierten elektrischen Stecker bei höheren Frequenzen, was die Zuverlässigkeit der elektrischen Verbindung am Flachstecker verbessert.

Insbesondere kann bei der Montage des Klemmbügels dieser durch eine erste Geometrie aufgeweitet werden und beispielsweise mit einer nach innen verlaufend ausgebildeten Rundung an den Schenkeln des Klemmbügels zwischen der ersten und einer weiteren zweiten Geometrie formschlüssig in der Finalumspritzung, eine Nut am Stutzen des Rücklaufsteckers durchsetzend verrastet werden. Die Demontage des Rücklaufsteckers kann dann analog zum bekannten im metallischen Ablaufstutzen montierten Klemmbügel durch einfaches Drücken auf die hintere Form des Klemmbügels erfolgen, der dann in einfacher Weise im Wesentlichen in horizontale Richtung verlaufend, eine weitere Aufbiegung ausführt, so dass keine Teile des Klemmbügels in der Verrastgeometrie des Rücklaufsteckers verbleiben und der in die Finalumspritzung hineinragende Rücklaufstecker freigegeben wird. Durch die erfindungsgemäß vorgeschlagene Lösung ist des Weiteren in vorteilhafter Weise erreichbar, dass die Halteplatte eine Abstützfläche für eine Tellerfeder, eine Ventilfeder und einen Ankerbolzen bietet. Die Halteplatte umfasst- exzentrisch angeordnet - auf der dem Stecker abgewandten Seite eine Bohrung für den Rücklaufanschluss, die eine Schräge aufweisen kann, in welche der im Wesentlichen senkrecht verlaufende Stutzen des Rücklaufsteckers eingeschoben werden kann. Da der Rücklaufanschluss exzentrisch liegt, kann die Halteplatte die auf die Symmetrieachse einwirkende Axialkraft des Ankerbolzens aufnehmen. Konzentrisch zur Bohrung in der Halteplatte verläuft die Aufnahme des Rücklaufsteckers in der Finalumspritzung. Der Steckerstutzen umfasst eine beispielsweise als umlaufende Ringnut dargestellte Ausnehmung für die Verriegelung sowie eine weitere Ausnehmung, in die ein O-Ring eingelassen ist, der als Dichtelement dient. Während der Montage des Rücklaufsteckers wird der O-Ring in der Schräge einer Bohrung in der Halteplatte komprimiert.

Aufgrund des Umstandes, dass die Schenkelenden des Klemmbügels vollständig von der Finalumspritzung umschlossen sind, kann in vorteilhafter Weise erreicht werden, dass die Verriegelung des Rücklaufsteckers in der Finalumspritzung nicht unbeabsichtigt wieder freigegeben werden kann. Des Weiteren kann durch das weitestgehende - im Wesentlichen in einer horizontalen Ebene erfolgenden - Einschieben der Schenkel des Klemmbügels in die Kanäle der Finalumspritzung erreicht werden, dass die Umfangsfläche der Finalumspritzung weitestgehend - abgesehen von dem zur Bedienung erforderlichen unbedingt hervorstehenden Maß des Klemmbügels über die Mantelfläche der Finalumspritzung - diese Stellgeometrie frei ausgebildet ist und daher auch zur Beschriftung zur Belaserung oder einer anderweitigen Markierung herangezogen werden könnte.

Ein weiterer großer Vorteil der Erfindung ist darin zu erblicken, dass der metallische Ablaufstutzen, der mit der Halteplatte zentrisch stoffschlüssig verbunden wird, entfallen kann und damit auch der Aufwand hinsichtlich der Verbindungsherstellung minimiert wird. Des Weiteren wir die Schrägbohrung in der Halteplatte, welche aufwändige Werkzeugmaschinen erfordert und fertigungstechnisch äußerst schwer herzustellen ist, durch eine axiale Bohrung ersetzt, die sich im Gegensatz zu einer Schrägbohrung wesentlich einfacher fertigen lässt.

Die erfindungsgemäß vorgeschlagene Magnetgruppe wird durch die Verlegung der Dichtstelle des hydraulischen Rücklaufanschlusses vom Ablaufstutzen in die Halteplatte niedriger, so dass die für den Fahrzeugteller maßgebliche Störgeometrie inklusive montiertem Rücklaufstecker abgesenkt werden kann, was insbesondere in Bezug auf passiven Fußgängerschutz einen Vorteil darstellt.

### Kurze Beschreibung der Zeichnungen

Anhand der Zeichnung wird die Erfindung nachstehend eingehender beschrieben.

Es zeigt:
- Figur 1: eine schematische Darstellung eines Kraftstoffinjektors, der durch ein Magnetventil betätigt wird,
- Figur 2: einen Rücklaufstecker, der in einen metallischen Ablaufstutzen montiert und dort verriegelt ist,
- Figur 3: einen Schnitt durch die Verriegelungsebene, d.h. die Ebene, in der ein Klemmbügel in eine Nut eines Rücklaufsteckerstutzens eingreift,
- Figur 4: eine Finalumspritzung mit elektrischer Kontaktierung und Rücklaufsteckerbohrung samt Einführschräge,
- Figur 5: die obere Planseite der Halteplatte mit in Kanäle eingeschobenen Klemmbügel,
- Figur 6: einen Schnitt durch die Verriegelungsebene der Halteplatte gemäß der Darstellung in Figur 5,
- Figur 7: eine Ansicht der Baugruppe aus Finalumspritzung mit Planseite und Magnetspannmutter,
- Figur 8: die in Figur 7 dargestellte Halteplatte im Schnitt mit verriegeltem Rücklaufsteckstutzen durch die Symmetrieachse der Rücklaufbohrung und
- Figur 9: ein Schnittverlauf VIII - VIII gemäß Figur 8 und eine Schnittdarstellung durch die in Figur 7 dargestellte Halteplatte.

### Ausführungsvarianten

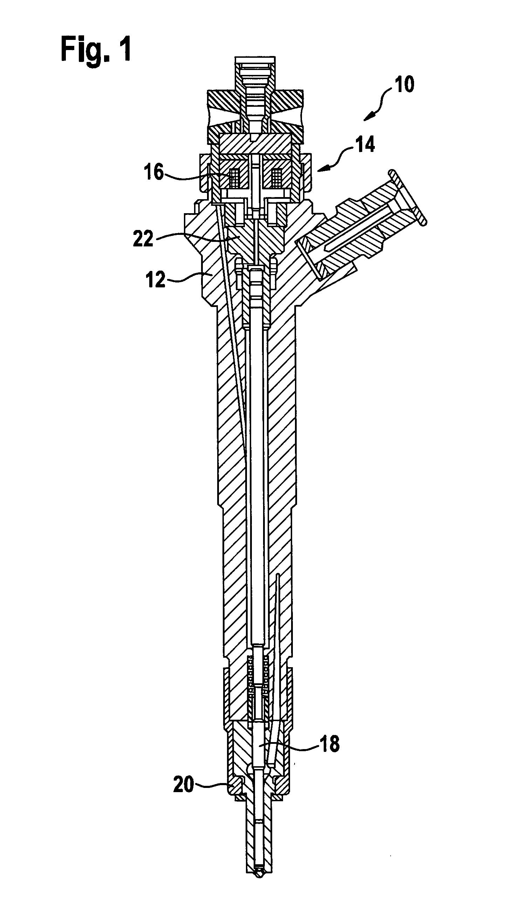

Figur 1 ist in schematischer Weise ein Kraftstoffinjektor 10 zu entnehmen, mit welchem Kraftstoff in den Brennraum einer Verbrennungskraftmaschine eingespritzt wird. Der Kraftstoffinjektor 10 umfasst einen Haltekörper 12 und eine Magnetgruppe 14. Die Magnetgruppe 14 ihrerseits nimmt eine Magnetspule 16 auf, über die ein beweglich im Haltekörper 12 aufgenommenes Einspritzventilglied 18 betätigbar ist. Das Einspritzventilglied 18 - im Allgemeinen nadelförmig ausgebildet - gibt an einem brennraumseitigen Ende und eines Düsenkörpers 20 vorgesehene Einspritzöffnung in den Brennraum der Verbrennungskraftmaschine frei oder verschließt diese, so dass Kraftstoff in den Brennraum eingespritzt werden kann. Der Kraftstoffinjektor 10 umfasst des Weiteren ein Ventilstück 22, das in den Haltekörper 12 eingebaut ist und Steuerräume zur Betätigung des Einspritzventilgliedes umfasst, deren Öffnung bzw. Verschließen durch die Magnetgruppe 14 gesteuert wird.

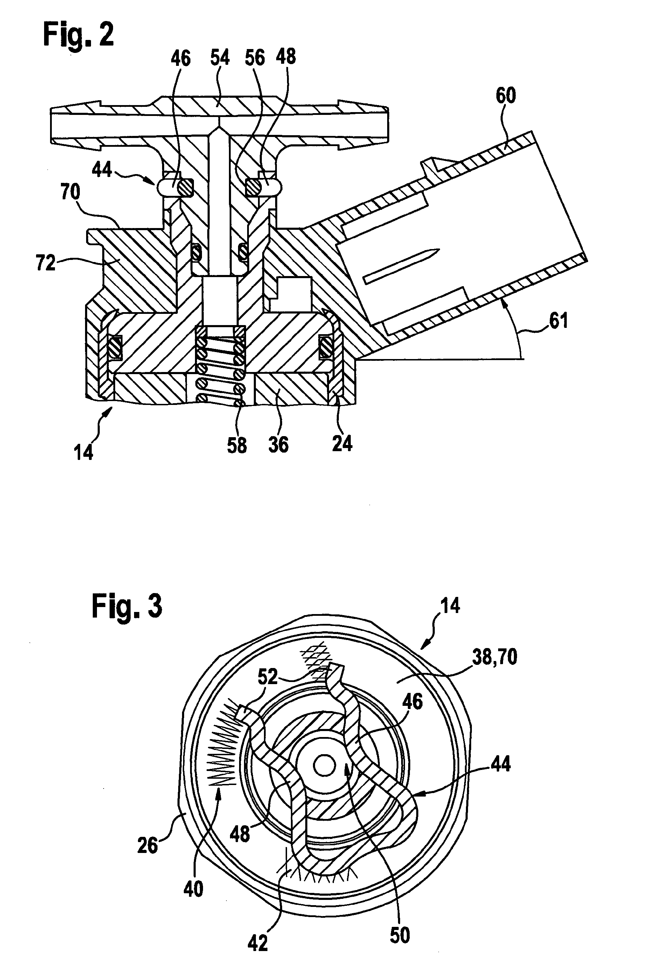

Der Darstellung gemäß Figur 2 ist eine Finalumspritzung 72 zu entnehmen, deren Steckerabgang 60 in einem Steckerabgangswinkel 61 von beispielsweise 15° ausgebildet sein. Anstelle des in Figur 2 dargestellten Abgangswinkels 61 könnten kleinere oder auch größere Winkel gewählt werden. Gemäß der Darstellung in Figur 2 ist ein Rücklaufstecker 54, der eine sich in horizontale Richtung erstreckende Bohrung aufweist, in denen eine vertikal verlaufende Bohrung mündet, mittels eines Klemmbügels 44 an einem metallisch ausgebildeten Ablaufstutzen aufgenommen. Der Ablaufstutzen aus Metall umfasst eine untere Planseite an die der Magnetkern 36 anliegt, der von der Magnethülse 24 umschlossen ist. Der metallische Ablaufstutzen umschließt ferner eine Feder 38. Der metallische Rücklaufstutzen und die Magnethülse 24 sind von der Finalumspritzung 72 umschlossen. Aus der Darstellung gemäß Figur 2 ergibt sich, dass der Rücklaufstecker 54 symmetrisch in den metallischen Ablaufstutzen eingeführt ist, so dass sich nur ein begrenzter Bereich als Applikation einer Beschriftung auf der Planseite 70 der Finalumspritzung 72 ergibt. Die elastisch ausgebildeten Schenkel des Klemmbügels 44 sind in der Klemmnut 56 des als Spritzgussteil gefertigten Rücklaufsteckers 54 verrastet.

Aus der Schnittdarstellung gemäß Figur 3 im Bereich der Verriegelungsebene ergibt sich, dass sowohl der rückwärtige Abschnitt des Klemmbügels 44 als auch Schenkelenden 52 eines ersten Schenkels 46 sowie eines zweiten Schenkels 48 des Klemmbügels 44 über die in Figur 3 ringförmig ausgebildete Planseite 70 hineinragen. Damit sind auf der oberen Seite der ringförmig konfigurierten Planseite 70 aufgebrachte Beschriftungen 40, unter anderem ein Datamatrix-Code, nur schwer maschinenlesbar, da sich unterschiedliche Winkelpositionen der Schenkelenden 52 und des rückwärtigen Griffbereichs des Klemmbügels 44 ergeben können, welche im ungünstigsten Fall die auf die ringförmig konfigurierte Planseite 70 gemäß der Darstellung in Figur 3 überdecken können, so dass die automatisiert durchgeführte Lesbarkeit zumindest beeinträchtigt wenn nicht völlig unmöglich gemacht ist.

In der Darstellung gemäß Figur 3 ist die ringförmige Planseite die gemäß des Ausführungsbeispieles in Figur 2 verbleibt, durch Bezugszeichen 38 identifiziert. Im Unterschied zur erfindungsgemäß vorgeschlagenen Lösung verläuft der Rücklaufanschluss in den Ausführungsbeispielen gemäß der Figuren 2 und 3 im Zentrum des metallisch ausgebildeten Druckstutzens.

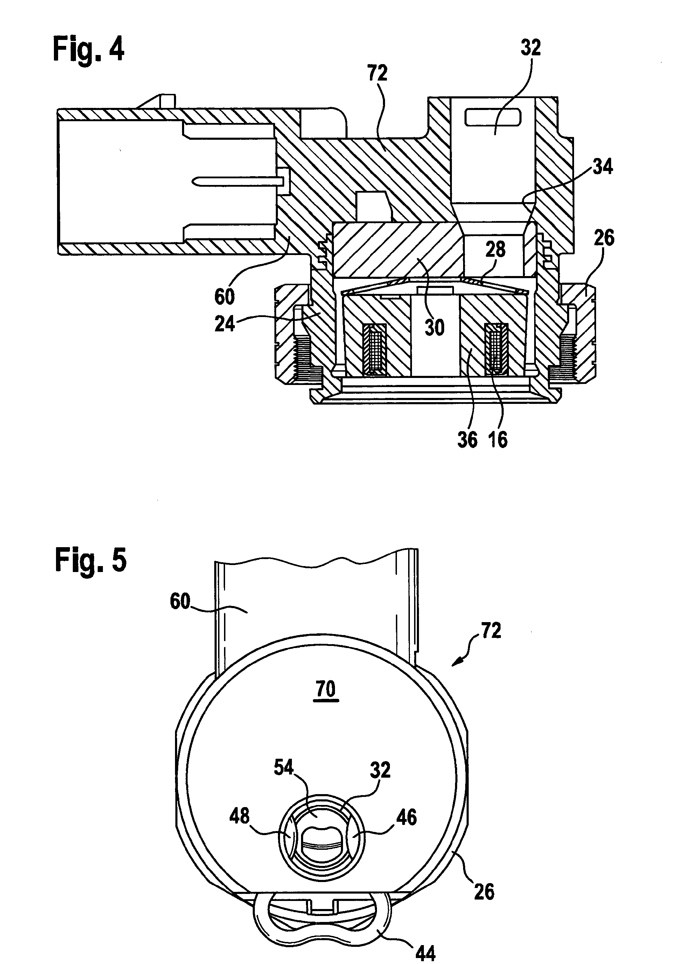

Figur 4 ist eine Ausführungsvariante einer Finalumspritzung zu entnehmen, in die einerseits ein Rücklaufsteckeranschluss und andererseits ein elektrischer Kontakt in Form eines Steckerabgangs integriert sind.

Figur 4 ist zu entnehmen, dass in dieser Ausführungsvariante eine Finalumspritzung 72, die bevorzugt aus Kunststoff gefertigt wird, eine Anlagefläche aufweist, an der eine Halteplatte 30 anliegt. Die Halteplatte 30 wiederum bildet eine mit ihrer unteren Planseite eine Anlagefläche für eine Tellerfeder 28, die ihrerseits einen Magnetkern 36 beaufschlagt, in dem die Magnetspule 16 aufgenommen ist. Der Magnetkern und die Halteplatte 30 sind gemäß der Darstellung in Figur 4 von einer Magnethülse 24 umschlossen. Die Magnethülse 24 wird durch über eine diese umgebende Magnetspannmutter 26 am Haltekörper 12 des Kraftstoffinjektors 10 verschraubt. Halteplatte, Tellerfeder, Magnetkern und Magnethülse werden während des Montageprozesses axial gegeneinander verspannt und in dieser Position durch eine stoffschlüssige Verbindung zwischen Halteplatte und Magnethülse fixiert, welche die Dichtheit nach außen sicherstellt. Aus der Darstellung gemäß Figur 4 geht des Weiteren hervor, dass die Finalumspritzung 72 und die Magnethülse 24 zum Beispiel formschlüssig miteinander verbunden sind.

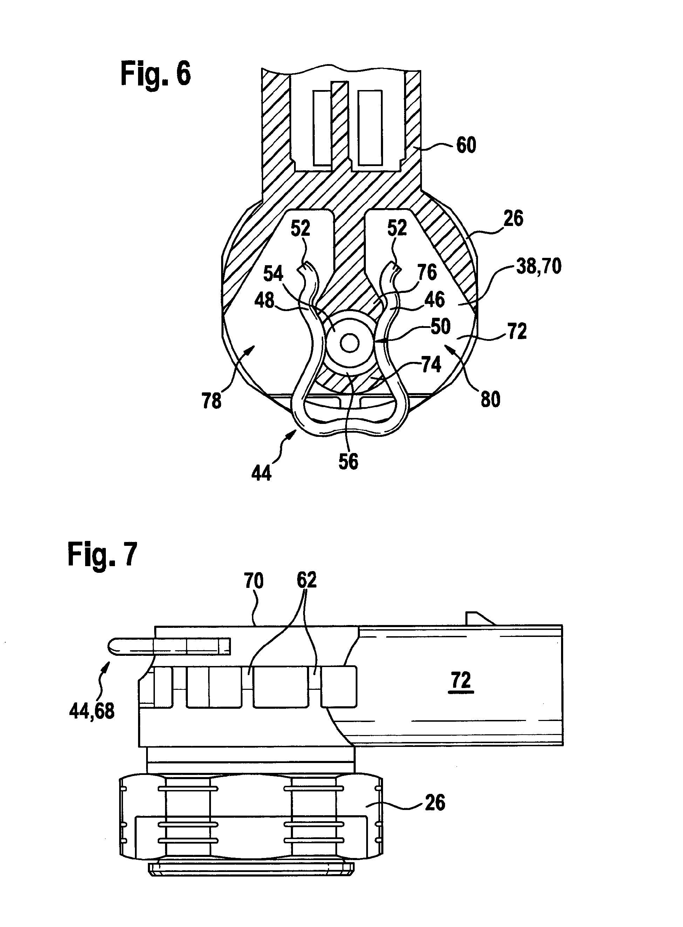

In der Ausführungsvariante der erfindungsgemäß vorgeschlagenen Lösung gemäß Figur 5 (ohne montierten Rücklaufstecker), ist die Finalumspritzung 72 derart ausgebildet, dass eine durchgängige unterbrechungsfreie Planseite 70 zwischen der Oberseite des Steckerabgangs 60 und der Finalumspritzung 72, die sich oberhalb der Magnetgruppe 14 befindet, erreicht wird. Dadurch wird eine erhebliche Verbesserung der Steifigkeit der Finalumspritzung 72 erreicht. Aus der Draufsicht gemäß Figur 5 geht zudem hervor, dass der Klemmbügel 44 (vergleiche Verlauf der Klemmbügelschenkel in Figur 6 mit montiertem kundenseitigen Rücklaufstecker) im Wesentlichen durch die Planseite 70 der Finalumspritzung 72 überdeckt ist, so dass der nicht vom Rücklaufsteckeranschluss 32 beanspruchte Bereich zum Aufbringen der Beschriftung 40 bzw. eines Datamatrix-Codes genutzt werden kann und frei von Störgeometrien ist. Der Darstellung gemäß Figur 5 ist zu entnehmen, dass in der exzentrischen Einstecköffnung 32 für den Rücklaufstecker 54 Teile des ersten Schenkels 46 bzw. zweiten Schenkels 48 zu erkennen sind, welche eine formschlüssige Sicherung des hier geschnitten dargestellten Rücklaufstutzens des Rücklaufsteckers 54 bilden. Unterhalb der Finalumspritzung 72 ist die Magnetspannmutter 26 zu erkennen. Durch die vorgeschlagene Lösung kann der kundenseitige Rücklaufstecker 54 direkt in der Halteplatte 30 abgedichtet werden, ohne dass das Bauteil Ablaufstutzen erforderlich wäre.

Aus der Draufsicht gemäß Figur 5 geht zudem hervor, dass über die Mantelfläche der Finalumspritzung 72 lediglich der zur Bedienung des Klemmbügels 44 unbedingt notwendige hintere Bereich des Klemmbügels 44 über die Mantelfläche der Finalumspritzung 72 hinausragt, so dass diese ebenfalls zur Aufbringung einer Beschriftung, sei es Aufgelasert, sei es mittels eines Tintenstrahldruckers aufgedruckt, genutzt werden könnte.

Der Darstellung gemäß Figur 6 ist ein Schnitt parallel zur Draufsicht gemäß Figur 5 durch die Magnetgruppe in der Ebene des Klemmbügels mit montiertem Rücklaufstecker zu entnehmen.

Aus Figur 6 geht hervor, dass die Finalumspritzung zwei taschenförmig ausgebildete Kanäle 78 bzw. 80 umfasst. Diese taschenförmigen Kanäle 78 bzw. 80 liegen unterhalb der in Figur 5 dargestellten Planseite 70 der Finalumspritzung 72. Des Weiteren ist in der Finalumspritzung 72 im Einführbereich des Klemmbügels 44 eine erste Geometrie 74 sowie eine zweite Geometrie 76 ausgebildet. Die erste Geometrie 74 dient der Aufweitung der gekrümmt bzw. gewellt ausgebildet verlaufenden Schenkel 46, 48 des Klemmbügels 44 dem eine Elastizität innewohnt, so dass ein Aufweiten der Schenkelenden 52 beim Einschieben der Schenkel 46, 48 in die taschenförmigen Kanäle 78, 80 gegeben ist. Des Weiteren umfasst die Finalumspritzung 72 die zweite Geometrie 76. Zwischen den beiden Geometrien 74, 76 sind die Schenkel 46, 48 eine formschlüssige Klemmverbindung 50 bildend, verrastet. Die Schenkel 46, 48 des Klemmbügels 44 sind insbesondere so ausgebildet, dass diese leicht nach innen gebogen sind und diese nach innen gebogenen Rundungen in einer komplementär zu diesen ausgebildete Geometrie in Gestalt einer Klemmnut 56 am Rücklaufsteckerstutzen des Rücklaufsteckers 54 eingreifen. Durch die in Figur 6 hervorgehenden ersten und zweiten Geometrien 74, 76 ist sichergestellt, dass einerseits der Klemmbügel 44 in einer horizontal in der Finalumspritzung 72 verlaufenden Verriegelungsebene fixiert ist und während seiner Fixierung an den ersten und zweiten Geometrien 74, 76 gleichzeitig die Klemmnut 76, ausgebildet als Ringnut oder andere Ausnehmung am Rücklaufstutzen eingreift, so dass dieser Teil des Rücklaufsteckers 54 bei verriegeltem Klemmbügel 44 zuverlässig in der Finalumspritzung 72 gehalten ist.

Aus der Darstellung gemäß Figur 6 durch die "Klemmbügelebene" geht des Weiteren hervor, dass die Schenkelenden 52 des ersten Klemmbügels 46 und des zweiten Klemmbügels 48 in den taschenförmig ausgebildeten Kanälen 78, 80 vollständig verschwinden und nur der hintere, zur Bedienung des Klemmbügels 44 erforderliche Bereich des Klemmbügels 44 über die Mantelfläche der Finalumspritzung 72 und die Magnetspannmutter 26 hervorsteht.

Figur 7 zeigt eine Seitenansicht der in den Figuren 5 und 6 in verschiedenen Schnittebenen dargestellten Finalumspritzung.

Figur 7 zeigt, dass die Finalumspritzung 72 an ihrer Oberseite die im Wesentlichen plan und störgeometrienfreie Planseite umfasst und in Figur 7 der Klemmbügel 44 in einer nicht verrasteten Position 68 dargestellt ist, in der der Klemmbügel leicht über die Umfangsfläche der Finalumspritzung 72 hervorsteht. Der Klemmbügel 44 verrastet in der Finalumspritzung 72. Während der Montage des Rücklaufsteckers 54 weitet der Rücklaufstecker 54 die Schenkel des Klemmbügels 44 auf, ohne dass eine Bewegung des Klemmbügels 44 zur Stecker abgewandten Seite erfolgt. Lediglich zur Demontage des Rücklaufsteckers 54 wird dieser in Richtung Rücklaufstecker 54 geschoben, wobei er sich an der Geometrie 76 soweit aufweitet, dass der Rücklaufstecker 54 freigegeben wird. Die Außenseite der Finalumspritzung 72 ist im Bereich der Magnetgruppe durch eine Verrippung 62 versteift; unterhalb der Finalumspritzung 72 befindet sich die Magnetspannmutter 26, vergleiche auch die Figuren 5 und 6.

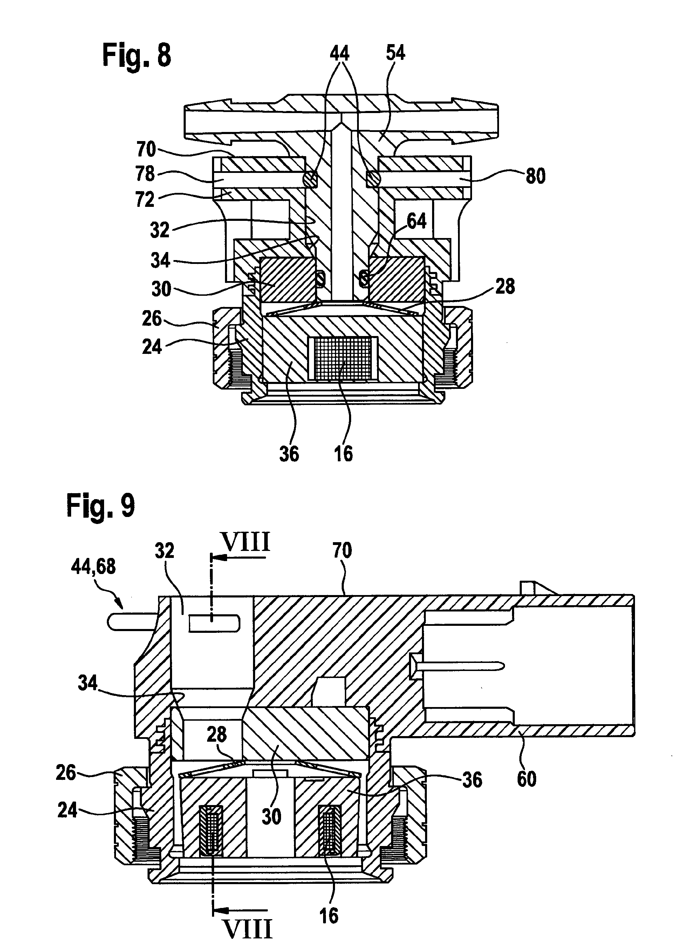

Figur 8 zeigt ein Schnitt durch die exzentrisch in Bezug auf die Symmetrieachse der Magnetbaugruppe verlaufende Rücklaufbohrung in der Finalumspritzung.

Aus der Darstellung gemäß Figur 8 geht hervor, dass der Rücklaufstecker 54 in die exzentrisch in der Finalumspritzung 72 ausgebildete Einstecköffnung 32, die eine Dichtschräge 34 umfasst, eingesteckt ist. In der Finalumspritzung 72 verlaufen die in Figur 6 dargestellten taschenförmig ausgebildeten Kanäle 78 bzw. 80, welche die beiden Schenkel 46, 48 des Klemmbügels 44 aufnehmen. Aus der Darstellung gemäß Figur 8 geht hervor, dass die Höhe der taschenförmig ausgebildeten Kanäle 78, 80 im Wesentlichen der Höhe der Schenkel 46, 48 des Klemmbügels 44 entspricht. Die Oberseite der Finalumspritzung 72 ist durch Bezugszeichen 70 identifiziert. Durch den in die taschenförmig konfigurierten Kanäle 78 bzw. 80 eingeführten Klemmbügel 44 ist der Stutzen des Rücklaufsteckers 54 in der Finalumspritzung 72 verrastet. Der Stutzen des Rücklaufsteckers 54 ragt durch Einstecköffnung 32, die Schräge 34 und weist ein Dichtelement 64 beispielsweise in Form eines O-Elementes auf. Mit diesem ist der Stutzen des Rücklaufsteckers 54 in der Halteplatte 30 abgedichtet. Figur 8 zeigt des Weiteren den nicht symmetrisch geschnittene Magnetkern 30 der Magnetspule 16 sowie die ebenfalls nicht exakt symmetrisch geschnittene Magnethülse 24, was dem Schnittverlauf durch den exzentrisch in der Finalumspritzung 72 aufgenommenen Rücklaufsteckers 54 samt Einstecköffnung 32 geschuldet ist.

Über die Magnetspannmutter 26 ist die Magnethülse 24 mit dem Haltekörper 12 des Kraftstoffinjektors 10 verbunden. Des Weiteren geht aus der Schnittdarstellung gemäß Figur 8 hervor, dass der Magnetkern 36 über die Tellerfeder 28 sich gegen die Halteplatte 30 abstützt.

Figur 9 zeigt den Schnittverlauf VIII - VIII gemäß der Darstellung in Figur 8 ist zu dieser um 90° gedreht.

Aus der Darstellung gemäß Figur 9 geht hervor, dass die Einstecköffnung 32 für den in Figur 9 nicht dargestellten Rücklaufstecker 54 exzentrisch in der Finalumspritzung 72 ausgebildet ist. Dies lässt sich am besten den Figuren 5 und 6 entnehmen. Im Gegensatz zur Darstellung gemäß Figur 8 ist in der Darstellung gemäß Figur 9 der Magnetkern 36 und sowie die von diesem umschlossene Magnetspule 16 symmetrisch dargestellt. Figur 9 zeigt, dass die Einstecköffnung 32 entlang einer Schräge 34 in eine dieser korrespondierende Öffnung in der Halteplatte 30 übergeht, welche den Rücklaufanschluss zum Haltekörper 12 des Kraftstoffinjektors 10 gemäß der Darstellung in Figur 1 darstellt. Aus den Figuren 5, 7 und 9 geht hervor, dass die Finalumspritzung 72 die obere eben ausgebildete Planseite 70 ohne irgendeine Störgeometrie aufweist, die im Vergleich zu bisherigen Ausführungen einer Finalumspritzung von Magnetgruppen mit jedweder Art von Beschriftungen 40 versehen werden kann, ohne dass eine Maschinenlesbarkeit von einer Orientierung eines Verriegelungselementes, beispielsweise in Gestalt eines Klemmbügels 44 abhinge.

Des Weiteren kann durch die Unterbringung des Klemmbügels 44 in den taschenförmig ausgebildeten Kanälen 78 bzw. 80 innerhalb der Finalumspritzung 72 in vorteilhafter Weise ein unbeabsichtigtes Entriegeln des Klemmbügels 44 sicher ausgeschlossen werden. Neben der Erhöhung der Steifigkeit durch die eben ausgebildete Planseite 70 der Finalumspritzung 72 kann durch den Überstand des rückwärtigen Bereiches des Klemmbügels 44 erreicht werden, dass dieser in einem möglichst geringen Maß über die Mantelfläche der Finalumspritzung 72 hervorsteht, was die Einbauverhältnisse günstig beeinflusst und die Möglichkeit öffnet, auch die Mantelfläche der Finalumspritzung 72 zum Aufbringen einer Beschriftung 40 heranzuziehen.

## Patentansprüche

1. Magnetgruppe (14) zur Betätigung eines Kraftstoffinjektors (10), mit einer Finalumspritzung (72), die einen Steckerabgang (60) mit elektrischen Kontakten aufweist, und mit einem Rücklaufsteckeranschluss mit einer Einstecköffnung (32, 34) für einen Rücklaufstecker (54) zur Abfuhr von Leckage-oder Steuermenge, wobei der Rücklaufstecker (54) mit einem Klemmbügel (44) verriegelt ist, und wobei die Finalumspritzung (72) aus Kunststoff gefertigt ist, **dadurch gekennzeichnet, dass** in die Finalumspritzung (72) der Rücklaufsteckeranschluss und der Steckerabgang (60) mit den elektrischen Kontakten integriert sind, und dass der Rücklaufstecker (54) an der Finalumspritzung (72) mit dem Klemmbügel (44) verriegelt ist.

2. Magnetgruppe (14) gemäß Anspruch 1, **dadurch gekennzeichnet, dass** die Finalumspritzung (72) eine erste und eine zweite Geometrie (74, 76) aufweist, die einen Teil einer formschlüssigen Verbindung (50) für den Klemmbügel (44) darstellt, wobei die erste Geometrie (74) die Schenkel (46,48) des Klemmbügels (44) zur Montage desselben aufweitet und die zweite Geometrie (76) zusammen mit der ersten Geometrie (74) die Schenkel (46,48) des Klemmbügels (44) fixiert.

3. Magnetgruppe (14) gemäß einem der vorhergehenden Ansprüche, **dadurch gekennzeichnet, dass** der Klemmbügel (44) in verriegeltem Zustand im Wesentlichen in der Finalumspritzung (72) aufgenommen ist.

4. Magnetgruppe (14) gemäß einem der vorhergehenden Ansprüche, **dadurch gekennzeichnet, dass** der Klemmbügel (44) in verriegeltem Zustand im Wesentlichen nicht über eine Außenkontur der Finalumspritzung (72) übersteht.

5. Magnetgruppe (14) gemäß einem der vorhergehenden Ansprüche, **dadurch gekennzeichnet, dass** die Finalumspritzung (72) taschenförmige Kanäle (78, 80) umfasst, in die die Schenkel (46, 48) des Klemmbügels (44) überstandsfrei eingeführt sind.

6. Magnetbaugruppe (14) gemäß einem der vorhergehenden Ansprüche, **dadurch gekennzeichnet, dass** der Rücklaufstecker (54) eine Ausnehmung (56) zur Aufnahme der Schenkel (46, 48) des Klemmbügels (44) aufweist.

7. Magnetbaugruppe (14) gemäß des vorhergehenden Anspruches, **dadurch gekennzeichnet, dass** die Ausnehmung (56) am Stutzen des Rücklaufsteckers (54) zu den Kanälen (78, 80) in der Finalumspritzung (72) fluchtet.

8. Magnetbaugruppe (14) gemäß einem der vorhergehenden Ansprüche, **dadurch gekennzeichnet, dass** die Oberseite der Finalumspritzung (72) als durchgängige Planseite (70) störgeometriefrei ausgeführt ist, die mit einer Beschriftung (40) oder einem Aufkleber versehbar ist.

9. Magnetbaugruppe (14) gemäß Anspruch 8, **dadurch gekennzeichnet, dass** die Planseite (70) der Finalumspritzung (72) die Steifigkeit derselben erhöht.

10. Magnetbaugruppe (14) gemäß einem der Ansprüche 5 oder 7, **dadurch gekennzeichnet, dass** die Kanäle (78, 80) im Wesentlichen taschenförmige ausgebildet sind und sich beidseits von Geometrien (74, 76) erstrecken.

11. Magnetbaugruppe (14) gemäß einem der Ansprüche 5, 7 oder 10, **dadurch gekennzeichnet, dass** die Kanäle (78, 80) taschenförmig ausgebildet sind und in der Finalumspritzung (72) unterhalb der durchgängig ausgebildeten störgeometriefreien Planseite (70) verlaufen.

12. Magnetbaugruppe (14) gemäß einem der vorhergehenden Ansprüche, **dadurch gekennzeichnet, dass** sich die Geometrie zur Dichtung des Rücklaufsteckers (54) direkt in einer Halteplatte (30) befindet, wobei die Finalumspritzung (72) eine Anlagefläche aufweist, an der die Halteplatte (30) anliegt, und wobei sich ein Magnetkern (36) der Magnetbaugruppe (14) über eine Tellerfeder (28) gegen die Halteplatte (30) abstützt.

## Claims

1. Magnet assembly (14) for actuating a fuel injector (10), with a final encapsulation (72), which has an outgoing connector feeder (60) with electrical contacts, and with a return connector terminal with an insertion opening (32, 34) for a return connector (54) for the removal of a leakage amount or a control amount, the return connector (54) being locked with a clamping bracket (44), and the final encapsulation (72) being produced from plastic, **characterized in that** the return connector terminal and the outgoing connector feeder (60) with the electrical contacts are integrated in the final encapsulation (72), and **in that** the return connector (54) is locked with the clamping bracket (44) on the final encapsulation (72).

2. Magnet assembly (14) according to Claim 1, **characterized in that** the final encapsulation (72) has a first and a second geometry (74, 76), which represents part of a positive connection (50) for the clamping bracket (44), the first geometry (74) widening the legs (46, 48) of the clamping bracket (44) for fitting of the same and the second geometry (76) together with the first geometry (74) fixing the legs (46, 48) of the clamping bracket (44).

3. Magnet assembly (14) according to one of the preceding claims, **characterized in that** the clamping bracket (44) in the locked state is substantially accommodated in the final encapsulation (72).

4. Magnet assembly (14) according to one of the preceding claims, **characterized in that** the clamping bracket (44) in the locked state does not substantially project beyond an outer contour of the final encapsulation (72).

5. Magnet assembly (14) according to one of the preceding claims, **characterized in that** the final encapsulation (72) comprises pocket-shaped channels (78, 80), into which the legs (46, 48) of the clamping bracket (44) are inserted without any projection.

6. Magnet assembly (14) according to one of the preceding claims, **characterized in that** the return connector (54) has a clearance (56) for receiving the legs (46, 48) of the clamping bracket (44).

7. Magnet assembly (14) according to the preceding claim, **characterized in that** the clearance (56) on the connecting piece of the return connector (54) is in line with the channels (78, 80) in the final encapsulation (72).

8. Magnet assembly (14) according to one of the preceding claims, **characterized in that** the upper side of the final encapsulation (72) is configured without any disturbing geometry as a continuous flat side (70), which can be provided with an inscription (40) or a sticker.

9. Magnet assembly (14) according to Claim 8, **characterized in that** the flat side (70) of the final encapsulation (72) increases the stiffness of the same.

10. Magnet assembly (14) according to either of Claims 5 and 7, **characterized in that** the channels (78, 80) are formed substantially as pockets and extend from geometries (74, 76) on both sides.

11. Magnet assembly (14) according to one of Claims 5, 7 or 10, **characterized in that** the channels (78, 80) are formed as pockets and in the final encapsulation (72) run underneath the continuously formed flat side (70) without any disturbing geometry.

12. Magnet assembly (14) according to one of the preceding claims, **characterized in that** the geometry for sealing the return connector (54) is located directly in a retaining plate (30), the final encapsulation (72) having an abutting surface on which the retaining plate (30) abuts, and the magnet core (36) of the magnet assembly (14) being supported against the retaining plate (30) by means of a cup spring (28).

## Revendications

1. Module magnétique (14) pour actionner un injecteur de carburant (10), comprenant un surmoulage final (72) qui présente un départ de connecteur (60) ayant des contacts électriques, et un raccord de retour de connecteur avec une ouverture d'enfichage (32, 34) pour un connecteur de retour (54) pour l'évacuation de quantités de fuite ou de commande, le connecteur de retour (54) étant verrouillé avec un étrier de serrage (44), et le surmoulage final (72) étant fabriqué en plastique, **caractérisé en ce que** le raccord de retour de connecteur et le départ de connecteur (60) sont intégrés aux contacts électriques dans le surmoulage final (72), et **en ce que** le connecteur de retour (54) est verrouillé au surmoulage final (72) avec l'étrier de serrage (44).

2. Module magnétique (14) selon la revendication 1, **caractérisé en ce que** le surmoulage final (72) présente une première et une deuxième géométrie (74, 76), qui constituent une partie d'une connexion par engagement par correspondance de forme (50) pour l'étrier de serrage (44), la première géométrie (74) élargissant les branches (46, 48) de l'étrier de serrage (44) en vue du montage de celui-ci et la deuxième géométrie (76) fixant conjointement avec la première géométrie (74) les branches (46, 48) de l'étrier de serrage (44).

3. Module magnétique (14) selon l'une quelconque des revendications précédentes, **caractérisé en ce que** l'étrier de serrage (44), dans l'état verrouillé, est reçu essentiellement dans le surmoulage final (72).

4. Module magnétique (14) selon l'une quelconque des revendications précédentes, **caractérisé en ce que** l'étrier de serrage (44), dans l'état verrouillé, ne dépasse sensiblement pas au-delà d'un contour extérieur du surmoulage final (72).

5. Module magnétique (14) selon l'une quelconque des revendications précédentes, **caractérisé en ce que** le surmoulage final (72) comprend des canaux en forme de poche (78, 80) qui sont introduits dans les branches (46, 48) de l'étrier de serrage (44) sans dépassement.

6. Module magnétique (14) selon l'une quelconque des revendications précédentes, **caractérisé en ce que** le connecteur de retour (54) présente un évidement (56) pour recevoir les branches (46, 48) de l'étrier de serrage (44).

7. Module magnétique (14) selon l'une quelconque des revendications précédentes, **caractérisé en ce que** l'évidement (56) est en affleurement au niveau du raccord du connecteur de retour (54) avec les canaux (78, 80) dans le surmoulage final (72).

8. Module magnétique (14) selon l'une quelconque des revendications précédentes, **caractérisé en ce que** le côté supérieur du surmoulage final (72) est réalisé sous forme de côté plan continu (70) sans perturbation de la géométrie, lequel peut être pourvu d'une inscription (40) ou d'un autocollant.

9. Module magnétique (14) selon la revendication 8, **caractérisé en ce que** le côté plan (70) du surmoulage final (72) augmente la rigidité de celui-ci.

10. Module magnétique (14) selon l'une quelconque des revendications 5 ou 7, **caractérisé en ce que** les canaux (78, 80) sont réalisés sensiblement sous forme de poche et s'étendent des deux côtés des géométries (74, 76).

11. Module magnétique (14) selon l'une quelconque des revendications 5, 7 ou 10, **caractérisé en ce que** les canaux (78, 80) sont réalisés sous forme de poche et s'étendent dans le surmoulage final (72) en dessous du côté plan (70) réalisé sous forme continue et sans perturbation de géométrie.

12. Module magnétique (14) selon l'une quelconque des revendications précédentes, **caractérisé en ce que** la géométrie pour l'étanchéité du connecteur de retour (54) se trouve directement dans une plaque de retenue (30), le surmoulage final (72) présentant une surface d'appui contre laquelle s'applique la plaque de retenue (30), et un noyau magnétique (36) du module magnétique (14) s'appuyant contre la plaque de retenue (30) par le biais d'une rondelle Belleville (28).
